# EUROPEAN PATENT APPLICATION

(11) **EP 2 824 649 A1**
(43) Date of publication of application: **14.01.2015**
(21) Application number: 13176332.8
(22) Date of filing: 12.07.2013
(51) Int. Cl.: G09B 5/00, G09B 5/12

(54) **Audio based learning system comprising a portable terminal connected to an audio unit and plurality of zones**

(71) Applicant: GN Store Nord A/S, 2750 Ballerup (DK)
(72) Inventor: Mossner, Peter, 2770 Kastrup (DK); Sørensen, Peter Schou, 2500 Valby (DK)
(74) Representative: Zacco Denmark A/S

(57) **Abstract**

This invention relates to an audio based learning system comprising at least one portable terminal configured to transmit rendered acoustic information to at least one audio unit about at least one zone which audio unit and least one zone are spatially interrelated; which at least one zone spans an area around a geographical position and has an outside and an inside separated by a zone boundary area which at least one zone inside has inside acoustic scene information; at least one audio unit is configured to be head worn and configured to communicate with the least one portable terminal and configured to sound outside acoustic scene information about the at least one geographical position of at least one zone when outside and to sound inside acoustic scene information when inside at least one zone.

## Description

### Field of invention

The present invention relates to an audio based learning system comprising a portable terminal connected to an audio unit and at least one zone, wherein at least one zone may comprise at least one post including at least one task. The audio based learning system may be configured to a local environment creating an augmented reality. Furthermore, the audio based learning system may comprise a setup tool for generating an augmented reality.

### Background of the invention

Learning and dissemination of knowledge is important for the continued development of the industrial society. Hence tools that can enhance learning and/or dissemination of knowledge are important tools.

Speech is an important carrier of information and knowledge and it is very well known that a subject can be taught a pupil by a mentor.

Some audio learning systems are known from museums. However such systems are sequential and require the pupil or listener to be relatively stationary or conform to the pre-coded or pre-planned sequence of events.

It is known that it can be difficult to concentrate on voice over long periods of time and thus learning can be difficult. Likewise it is known that it can be difficult to remember or memorise information from a voice for later reflection.

Although it is known that learning, at least for some individuals, is enhanced when physical activity is performed either during the actual learning or regularly in between slots of learning, then learning is increased, barriers remain in making such learning systems and there are barriers to distribute learning systems since every simple learning system has to be tailor made to a new setting.

It is an objective of this invention to overcome such barriers.

### Summary

An objective of the invention is achieved by an audio based learning system comprising at least one portable terminal configured to transmit rendered acoustic information to at least one audio unit about at least one zone which audio unit and least one zone are spatially interrelated; which at least one zone spans an area around a geographical position and has an outside and an inside separated by a zone boundary or boundary area which least one zone inside has inside acoustic scene information; at least one audio unit is configured to be head worn and configured to communicate with the least one portable terminal and configured to sound outside acoustic scene information about the at least one geographical position of at least one zone when outside and to sound inside acoustic scene information when inside at least one zone.

Thereby is provided an audio system that overcomes the problems of the prior art by providing a zone based learning environment that can guide a user amongst different learning zones that each can be particularly configured to make the user more susceptible or motivated for learning. For example by making the user concentrate, be active and thus enhancing the learning.

The rendered acoustic information may be a 3 dimensional (3D) sound , wherein the rendered acoustic information may include a sound adapted to a geographical position, wherein the sound may be depended on a distance value and an orientation value to the geographical position.

The portable terminal may be configured to transmit rendered acoustic information to an audio unit, wherein the audio unit may be configured to recreate the rendered acoustic information into a 3D sound and emitting the 3D sound. The emitted 3D sound may create a 3D acoustic scene to a user.

In one or more embodiments the portable terminal may be a smart phone, a laptop, a tablet, a headset with in-build processor and wireless connection, or an electronic intelligent processor device. The portable terminal may be configured to comprise rendered acoustic information, wherein rendered acoustic information may include an acoustic scene augmenting local environment. The local environment may be a school area, a local park, inner city, a boat and a building and/or indoor constructions etc. The portable terminal may at least include 2g, 3g, 4g and 5g wireless network, GPS unit, orientation unit, a communication interface and a display unit. The orientation unit may include gyro scope, accelerometer and/or electronic compass. A communication interface may receive and/or transmit acoustic information, acoustic scene, rendered acoustic scene information and/or recorded acoustic information.

The audio based learning system comprises rendered acoustic information, wherein the rendered acoustic information may comprise sounds adapted to an object or any kind of a physical element/object.

An augmented reality is a view of a local environment whose element(s) may be augmented by generated input, such as sound.

The audio based learning system comprises an audio unit, wherein the audio unit may comprise at least one speaker, a headband or a neckband, a communication interface and an inertial measurement. The communication interface may be wired or wireless. The inertial measurement may include a geographical position unit and an orientation unit. Furthermore, the audio unit may comprise at least one microphone. The advantage of the audio unit is that unwanted acoustic information is eliminated, and thereby, the impression of being in an augmented reality is strengthened.

In one or more embodiments the inside acoustic scene information may comprise at least one post preferably with a task most preferably an interactive task. In one or more embodiments at least one post may comprise at least one task, wherein the at least one task may be an interactive task or a passive task. The interactive task may include an assignment to be solved by a user of an audio unit. The passive task may include info or hints about a subject.

In one or more embodiments at least two posts including at least a first and a second post. Both posts may include at least one task. The at least first post may interact with the at least second post, and thereby, the outcome of the at least first post may change the task of the at least second post. The advantage of this is that the audio based learning system may tailor at least one task according to the outcome of another post. The effect is that the audio based learning system may effectively and in a targeted or focused way enable the learning of the user.

There may be active posts or passive posts. An active post may be a post that a user can interact with. A passive post may be a post that does not interact. A passive post may however be dynamic and change in time and space. A background scene may be formed by one or more passive posts.

In one or more embodiments the audio unit may comprise a geographical position unit configured to estimate the geographical position of the audio unit.

A user wearing the portable terminal and the audio unit may experience a 3D acoustic scene/universe. When the user is moving away from an object being augmented by a 3D sound, the user will experience that the 3D sound level and/or the acoustic information would change, and thereby, causing a change in the 3D acoustic scene.

It is understood that in a 3D universe the audio unit, as part of the learning system, may provide directional information about the objects or posts in the universe or acoustic scene according to where the user is.

A person skilled in the art will easily implement a 2D universe also with directional information, and in principle also a 1D universe.

In one or more embodiments the geographical position unit may comprise a global positioning system (GPS) unit for receiving satellite signal for determining the geographical position of the audio unit. Throughout the present disclosure, the term GPS-unit is used to designate a receiver of satellite signals of any satellite navigation system that provides location and time information anywhere on or near the Earth, such as the satellite navigation system maintained by the United States government and freely accessible to anyone with a GPS receiver and typically designated "the GPS-system", the Russian GLObal NAvigation Satellite System (GLONASS), the European Union Galileo navigation system, the Chinese Compass navigation system, the Indian Regional Navigational Satellite System, etc, and also including augmented GPS, such as StarFire, Omnistar, the Indian GPS Aided Geo Augmented Navigation (GAGAN), the European Geostationary Navigation Overlay Service (EGNOS), the Japanese Multifunctional Satellite Augmentation System (MSAS), etc.

In one or more embodiments the geographical position unit is a WiFi-network with different stations or fix points and means for determining a position by triangulation or alike geometrical functions.

A user wearing a portable terminal and the audio unit, wherein the portable terminal may transmit a endered acoustic scene information to the audio unit. The rendered acoustic scene information received by the audio unit may be transformed into a 3D sound being a 3D acoustic scene transmitting, e.g. into at least one human ear. The 3D acoustic scene may be configured to an ensemble comprising a plurality of zones, wherein a zone may be adapted to an object or a point-of-interest (POI) configured to a local environment. Each object and/or POI is augmented by a sound creating a 3D acoustic scene. Each zone may include at least one post, wherein when the user enters a zone the sound of the at least one post will become the 3D acoustic scene.

The user moving around in the local environment would experience a spatially interrelation between the audio unit and the plurality of zones, since when the user is moving towards or away from a zone the user would experience that the 3D acoustic scene would change according to his/her position, e.g. the 3D sound level would decrease and/or a change of an acoustic information when the user is moving away from the zone. When the user enters a zone the user may experience a change in the 3D acoustic scene, and when being inside the zone the change in the 3D acoustic scene may depend on the position according to the least one post.

Again, the audio unit may provide directional information about the objects or posts in the universe or acoustic scene according to where the user is.

In one or more embodiments the audio unit may comprise an orientation unit for estimating a current orientation of a user when the user handles the orientation unit in its intended operational position.

In one or more embodiments the orientation unit may comprise a gyroscope, an electronic compass, and/or an accelerometer for measuring head orientation of a user wearing an audio unit.

A user wearing a portable terminal and the audio unit would experience an improved spatially interrelation since the 3D acoustic scene would change according to his/her position and orientation in the local environment, e.g. when the user is moving away from a zone the user would experience a 3D sound level decrease and/or a change of an acoustic information. If the user is changing his/her orientation the user would experience a change of sound levels of the plurality of zones, e.g. when the user is changing the orientation, and thereby, changing attention from a first zone to a second zone, the sound level of the second zone compared to the sound level of the first zone would be higher. When the user enters a zone the user would experience a change in the 3D acoustic scene, and when being inside the zone the change in the 3D acoustic scene may depend on the position and the orientation according to the least one post. Thereby, since the 3D acoustic scene depends on the position and the orientation, the spatially interrelation between a zone and the audio unit is further improved.

In a particular embodiment a post may start to interact with a user when orientation unit is direted towards the post. In a particular case this may be when the user looks at a post. It may also be possible that a passive post becomes active when attention is directed to a post.

In one or more embodiments the audio unit may comprise a microphone and means for transmitting acoustic information to the portable terminal. In one or more embodiments the microphone may record a sound. In a further embodiment the portable terminal may comprise a voice recognizer, and when recording a sound with the microphone a second task, a second post and/or a second zone may be generated. The advantage is that the user is able to know the result of the first task, and the audio based learning system is able to tailor the second task, the second post and/or the second zone on the basis of the outcome of the first task.

In one or more embodiments the terminal may be configured to render the transmitted acoustic information into either an inside or an outside acoustic scene as a function of being inside or outside a zone. The advantage of this is that the user is able to distinguish between being outside or inside a zone.

In a particular embodiment the rendering may be implemented to stream acoustic sounds in real time and may have a voice over, be processed through an equalizer or even be distorted, say by processing a voice to resemble the voice of a character.

In one or more embodiments the terminal may be configured to store, retrieve and replay acoustic information from an acoustic scene. In one or more embodiments the terminal may transmit rendered acoustic information to at least one audio unit. The advantage is that the at least one user is able to use an audio based learning system without wearing a portable terminal, causing the user to being more moveable, and thereby, the audio based learning system may be more ideal for physical activities.

In one or more embodiments the terminal may be configured to communicate and share acoustic scenes with at least one other terminal. The advantage of having a terminal being able to communicate and share acoustic scenes with at least one other terminal is that the audio based learning system may be used in different local environments and/or by plurality of users being in at least two teams.

In a particular embodiment a recording can be made and played back at a later point in time. At that later point in time a tutor may evaluate the recording and may even provide comments as voice over. In yet another embodiment the commented recording may be used by the user to either receive the comments as feedback and perhaps even replay the original event.

In one or more embodiments one audio unit may be a master system and at least one other audio unit may be a slave system. The advantage of having a master/slave system is that the audio based learning system may comprise plurality of users being in plurality of teams, wherein each teams may have their own leader. The leader of a first team may comprise an audio unit being the master system and the other user of the first team may each comprise an audio unit being the slave system. The advantage of this is that the audio based learning system may teach the users how to cooperate and how to be a leader.

In one or more embodiments the terminal may be embedded in the audio unit; which audio unit preferably is a headset.

The user is moving around in a local environment being configured to an ensemble comprising plurality of zones, wherein each zone is comprising plurality of posts. The audio unit is being a headset, and If a user is yawing his/her head the user would experience a change of sound levels of the plurality of zones, e.g. when the user looks at a zone the sound from the specific zone will be played on top of all sounds played from zones being out of focus. When user enters a zone, the multiple post sounds will become the 3D acoustic scene.

All post sounds may be heard within the zone, and when user looks in the direction of a post, the post sound may be played differently, say louder.

The zone-background-sounds from all zones are played, with a distance-based volume and 3D direction. When user presses button looking at zone, that zone-foreground-sound will be played on top of all zone-background-sounds.

In one or more embodiments the setup tool may be configured to interactively create, store, edit an ensemble of at least one zone with a span, with an inside acoustic scene and a geographic position.

In one or more embodiments the setup tool may be configured to operate in an augmented reality.

In one or more embodiments the setup tool may be configured to interactively create an ensemble which is tailored to at least one user. The setup tool may use the received personal information of at least one user to create one or more tailored ensemble. The received personal information may be from a social network.

The advantage of the setup tool is that the audio based learning system may be able to create an ensemble which has the most interest of the user, e.g. the user is at the moment interested in football and the setup tool may create an ensemble which is only about football. The selected ensemble would then enhance his encourage to learn more about football. Furthermore, selecting an environment that the user knows will make the user more susceptible for learning simply by being more stimulated or concentrated in that particular environment. Thus the setup tool can create ensembles with different themes and different themes can easily be used to effectively the same learning objectives.

In other embodiments the setup tool may be in an augmented reality.

In one or more embodiments the setup tool may further comprise an auto placement algorithm configured to access a local environment of geospatial information from a geospatial information server and to setup at least one ensemble with at least zone and which auto placement algorithm may be configured to perform a placement of each zone within the local environment as a function of the local environment ().

The advantage of the auto placement algorithm of an ensemble is that the ensemble may be transferred from a local environment to another local environment without generating a new ensemble, and thereby, saving time would encourage the user to use the audio based learning system more frequently.

In one or more embodiments the auto placement algorithm may be configured in a computational unit for performing initiation of an ensemble (); establishing placement variables; placement of an ensemble according to placement variables; iteratively performing the following functions:
o determine if placement of an ensemble according to an ensemble match variable(s) is adequate and if adequate store placement variable
o increment of at least one placement variable; until the placement variable preset range has been iterated;
select placement.

The advantage of implementing the auto placement algorithm in a computational unit may be that a user is able to configure a local environment to an audio based learning system while physically being at the local environment. The computational unit may be a computer, a PC, a laptop, a table or a smart phone.

In one or more embodiments the iteration may be performed in a "while" loop type until an adequate placement has been found. A person skilled in the art will appreciate that different loops can be configured either to scan a predetermined parameter regime to find multiple adequate solutions and from those select one. Alternatively to configure a loop to simply find one adequate solution, which adequate solution might be optimal, close to optimal or simply the first found solution.

In a particular embodiment a setup tool may be a setup of the learning system which is created by a teacher.

The advantage of the setup tool is that a teacher is able to setup an ensemble for each student or for the whole class, and thereby, more resources are being extricated from the teacher to students which may need extra attention, in terms of more learning.

The setup may be defined by a number of zones each spanning a set of XY coordinates (meters).

In one embodiment a zone is defined by the center of the zone, a zone center tolerance (meters), a zone size (meters) and a zone size tolerance (meters). The zone center may be placed at a geographic position.

If more than one XY coordinate is given this indicates that the zone is not circular, but is defined by a number of line segments. In this case the first set of XY coordinates defines the reference point of the zone, the following XY coordinate sets define the start and end points of the line segments.

Within a zone a number of tasks may be situated. Each task ask having a set of XY coordinates, XY coordinate tolerance (meters), a content package and, optionally, a set of special requirements.

If the task may be situated in more than one place in the zone several sets of XY coordinated may be supplied, alternatively, if no XY coordinates are given, this indicates that the system may place the task anywhere within the boundaries of a particular zone.

A number of zone pathways defined by the XY or reference or center coordinates of the connected zones. The purpose of the zone pathways is to ensure that the students can actually move from one zone to another

A setup reference point which is used as reference point for the zone XY coordinates and the task XY coordinates.

Special physical requirements of tasks such may be to be a near a building of a certain high, being close to an open field of a certain size, or having access to water.

The zones and the tasks with their geometric relationship as defined by their XY coordinates may constitute a Learning System Setup Ensemble, which ensemble has one or more zones. An ensemble of zones may be considered a body, a set, a collection or alike.

The teacher may use the auto placement algorithm input to define a point which is used as pivot around which the Setup Body is rotated. The pivot placement has a tolerance given in meters. The rotation is done in steps, for each rotational step the algorithm additionally moves the body x meters in direction Y, X being defined by the tolerances in the setup specification, the direction Y being stepped from 0 to 360 degrees, and X being stepped from 0 to 100 percent of the allowed displacement. For each position the quality of the placement is evaluated. If all the parts of the body are placed so that they do not overlap with unacceptable terrain features (such as a lake, a highway etc), then the match or fix is 100% or otherwise adequate. In one way the algorithm tries to fit the ensemble or body to the terrain by a combination of rotational and lateral displacement.

In one or more embodiments a distribution system may be configured to create, store, edit and share an ensemble of at least one zone.

In one or more embodiments the distribution system may be configured to create, store, edit and share an ensemble of at least one zone and to apply auto placement algorithm as disclosed.

Rendered acoustic information may be generated by a setup tool working in a computer, providing a flexible, maintainable, and extensible architecture to enable the quick development of audio based experiments. The setup tool may be provided by an API (Application Programming Interface) for specifying the acoustic scene as well as an extensible architecture for exploring multiple rendering strategies.

The API may comprise a number of parameters including sound source specification (device, file, and signal generator plug-ins), source gain, source location, source trajectory, listener position, listener HRTF (Head-Related Transfer Function) database, surface location, surface material type, render plug-in specification, scripting, and low-level signal processing parameters.

Potential applications include psychoacoustic research, spatial auditory display prototypes, virtual reality for simulation and training, augmented reality for improved situational awareness, enhanced communication systems and education. For these applications and others, the setup tool provides a low-cost system for dynamic synthesis of virtual audio over an audio unit, e.g. a headset, without the need of special purpose signal processing hardware.

An acoustic information may comprises a virtual source generated by the setup tool. The acoustic information may be transferred to a portable terminal or a terminal, and thereby the portable terminal and/or terminal may transfer the acoustic information to an audio unit, e.g. headset.

It is understood that objects, zones, tasks, geographically positioned structures can be related or positioned relatively to each other, e.g. augmented related; spatially interrelated, dynamically interrelated and/or stationary spatially interrelated.

Throughout the present disclosure, the term 3D acoustic scene and 3D sound may be referred to as acoustic scene and sound, respectively.

### Brief Description of Drawings

Embodiments of the invention will be described in the figures, whereon:
- Fig. 1: illustrates a learning system with a terminal, a zone, and an audio unit,
- Fig. 2: illustrates a zone with acoustic scene,
- Fig. 3: illustrates an embodiment with an audio unit that is outside a zone - in an outside acoustic scene,
- Fig. 4: illustrates an embodiment with an audio unit that is inside a zone - in an inside acoustic scene,
- Fig. 5: illustrates an embodiment with an audio unit that is inside a zone - in an inside acoustic scene
- Fig. 6: illustrates an embodiment with an audio unit inside a zone with an audio scene with multiple posts with different tasks,
- Fig. 7: illustrates an embodiment with an audio based learning system with a geographic position determined by a GPS installed in an audio unit,
- Fig. 8: illustrates an embodiment with a learning system implemented in a geographic area and with multiple zones and multiple audio units,
- Fig. 9: illustrates a setup tool of a learning system with access to a geographic server,
- Fig. 10: illustrates a flow chart of an auto placement algorithm for a setup tool of a learning system,
- Fig. 11: illustrates a detail flow chart of a setup algorithm,
- Fig. 12: illustrates an ensemble in a terrain and a displacement of an ensemble,
- Fig. 13: illustrates an ensemble in a terrain and a rotation of an ensemble,
- Fig. 14: illustrates a non-adequately placed ensemble and a rotation,
- Fig. 15: illustrates a continued non-adequately placed ensemble,
- Fig. 16: illustrates an additional rotation of an ensemble,
- Fig. 17: illustrates an additional displacement and rotation of an ensemble,
- Fig. 18: illustrates a rotation and a displacement shift,
- Fig. 19: illustrates an exemplary of an auto placement algorithm searching for an optimal placement of an ensemble,
- Fig. 20: illustrates an exemplary of a graphical user (GUI) interface of a distribution system, and
- Fig. 21: illustrates a particular placement system for random and best placement selection.

### Detailed Description

| **Item** | **No** |
|---|---|
| Audio based learning system | 1 |
| Portable terminal | 2 |
| (Rendered and transmitting) acoustic information | 3 |
| Acoustic information | 4 |
| Microphone | 5 |
| Audio unit | 6 |
| Communicate | 8 |
| Zone | 10 |
| A first zone | 10A |
| A second zone | 10B |
| A third zone | 10C |
| Inside | 11 |
| Inside acoustic scene information | 12 |
| Acoustic scene | 12A |
| Outside acoustic scene information | 13 |
| Geographical position | 14 |
| First geographic position | 14A |
| Second geographic position | 14B |
| Third geographic position | 14C |
| Spatial interrelated | 15 |
| Zone boundary area | 16 |
| First zone boundary area | 16A |
| Second zone boundary area | 16B |
| Third zone boundary area | 16C |
| Outside | 17 |
| Zone-Background sound | 18 |
| First zone background sound | 18A |
| Second zone background sound | 18B |
| Third zone background sound | 18C |
| Zone intro sound | 19 |
| Post | 20 |
| First active post | 20A |
| Passive post | 21 |
| First passive post | 21A |
| Second passive post | 21B |
| Third passive post | 21C |
| Post background sounds | 22 |
| Post background sound level | 22A |
| Post activation sound | 23 |
| Post activation sound level | 23A |
| Post feedback sound | 23a |
| Inertial measurement | 24 |
| Position unit | 24A |
| Orientation unit | 24B |
| Satellite system | 25 |
| GPS satellite signal | 26 |
| Volume axes | 27 |
| Radius axes | 28 |
| Task | 29 |
| Interactive task | 29B |
| A first user | 35A |
| A second user | 35B |
| A third user | 35C |
| A fourth user | 35D |
| Wireless and/or wired | 37 |
| A base station | 38 |
| Learning system setup | 39 |
| A map server | 40 |
| Building | 41 |
| Lake | 42 |
| Map | 43 |
| Initialized map | 43a |
| Road | 44 |
| Ensemble | 45 |
| Setup tool | 90 |
| Auto placement algorithm | 91 |
| Initiation of an ensemble | 92 |
| Establishing placement variables | 93 |
| Placement of an ensemble according to placement variables | 94 |
| Placement of an ensemble according to an ensemble match variable is adequate? | 95 |
| Store placement variable | 96 |
| Required placement variables iterated | 97 |
| Increment of at least one placement variable | 98 |
| Placement selection | 99 |
| "L"-shape zone | 122 |
| Circular zone | 123 |
| Triangular zone | 124 |
| Rectangular zone | 125 |
| Pathway | 126 |
| Stream | 128 |
| Displacement value shift | 129 |
| Rotation angle shift | 129A |
| Reference point | 130 |
| Vertical displacement tolerance | 131 |
| Horizontal displacement tolerance | 132 |
| Auto alogithm | 133 |
| Prefer ensemble | 134 |
| Preferred displacement value | 135 |
| Displacement value | 136 |
| Displacement angle | 137 |
| Rotation angle | 138 |
| First inner radius | Rin1 |
| First outer radius | Rout1 |
| Second outer radius | Rout2 |
| First primary post radius | Rp11 |
| Second primary post radius | Rp12 |
| First secondary post radius | Rp21 |
| Second secondary post radius | Rp22 |
| A first zone radius | Rz1 |
| A second zone radius | Rz2 |
| Distribution system | 139 |
| Init ensemble interface | 140 |
| Init placement of ensemble interface | 141 |
| Auto init | 142 |
| Selected position interface | 143 |
| Manual init | 144 |
| Difficulty level | 145 |
| Random init | 146 |
| Augmented reality | 147 |
| Local environment | 148 |
| Geospatial information | 149 |
| Server subject init | 150 |
| Subject init | 151 |
| Local subject init | 152 |

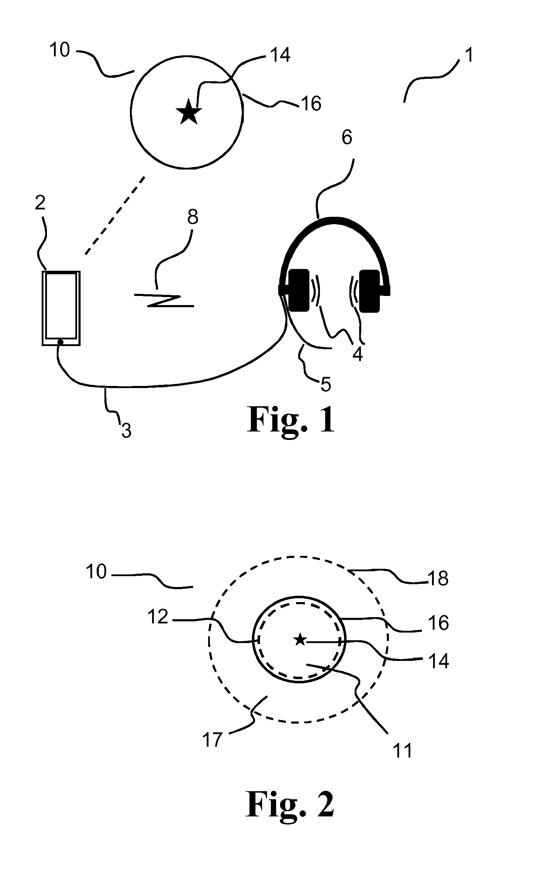

Fig. 1 schematically illustrates an exemplary audio based learning system 1 according to the invention. The audio based learning system 1 has a portable terminal 2, an audio unit 6 and a zone 10. The portable terminal 2 is configured to transmit via a cable 3 or wirelessly rendered acoustic information 4 to an audio unit 6 about a zone 10. In this particular example the portable terminal 2 is configured to transmit via a cable 3 rendered acoustic information 4 to an audio unit 6 about a zone 10.The zone 10 spans a zone boundary area 16 around a geographic position 14. The audio unit 6 communicates 8 wirelessly with the portable terminal 2. The zone boundary area 16 may be uniformly or non-uniformly distributed. In this particular example the zone boundary area 16 is uniformly distributed. The audio unit 6 may comprise a microphone 5 for transmitting acoustic information 3 to the portable terminal 2. Both the inside acoustic scene information and the zone background sound may be a mono, stereo and/or a 3D sound.

Fig. 2 schematically illustrates an exemplary zone 10 of the audio based learning system 1. The zone 10 comprises a geographical position 14 surrounded by a zone boundary area 16. The zone 10 has an inside 11 and an outside 17 separated by a zone boundary area 16. The inside 11 has an inside acoustic scene information 12 and the outside 17 has a zone background sound 18.

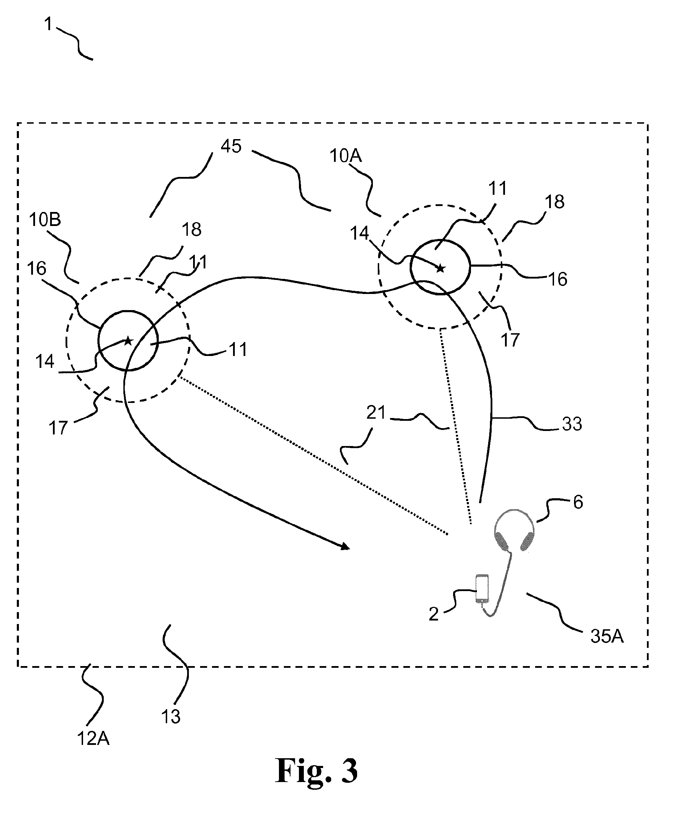

Fig. 3 schematically illustrates an exemplary of the audio based learning system 1, wherein the audio based learning system comprising an acoustic scene 12A and an ensemble 45 including a first zone 10A and a second zone 10B. The acoustic scene 12A include an inside acoustic scene information and/or an outside acoustic scene information. Furthermore, the audio based learning system 1 comprises a first user 35A wearing a portable terminal 2 and an audio unit 6. The first user 35A is guided 33 by rendered acoustic information 4 between the first zone 10A and the second zone 10B, wherein the audio unit 6 and the first zone 10A and the second zone 10B are spatial interrelated 15. When the first user 35A is outside 17 the rendered acoustic information 4 sounds the outside acoustic scene information 13 and the zone background sounds 18 from the first zone 10A and the second zone 10B, respectively.

Throughout the present disclosure, the term user is referring to a living creature wearing a portable terminal 2 and an audio unit 6, wherein the audio unit may include a microphone 6a.

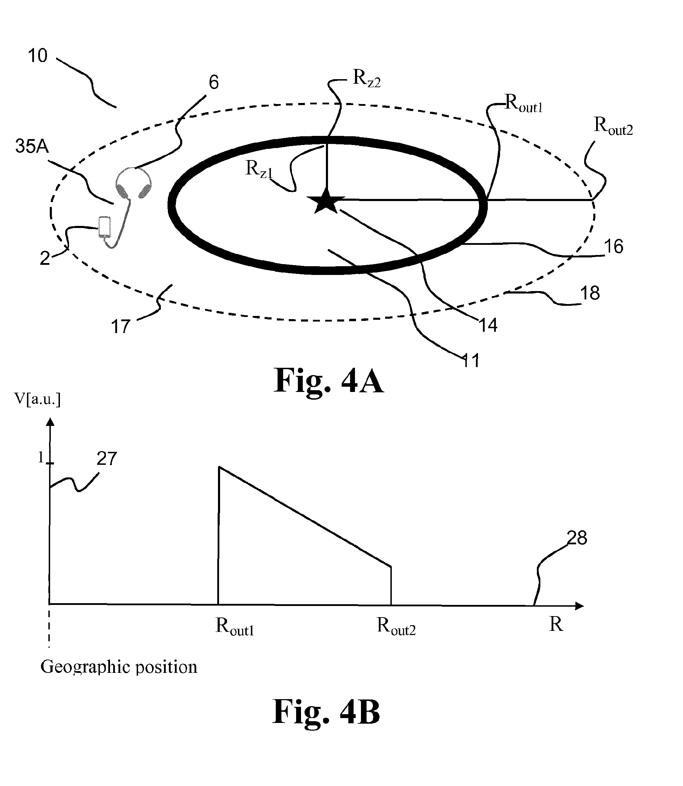

Fig. 4A and 4B illustrate an exemplary of a distance based volume of a zone 10 according to the invention, when a first user 35A is placed outside 17. The outside 17 is configured to a zone background sound 18, wherein the zone background sound may be provided outside 17 and/or between a first outer radius Rout1 and a second outer radius Rout2. In this example the zone background sound 18 is provided between a first outer radius Rout1 and a second outer radius Rout2. The second outer radius Rout2 is in the range from 5 m to 200 m, such as 10 m to 100 m, such as 15 m to 50 m, and such as 20 m to 30 m. The first outer radius Rout1 is in the range from 2 m to 175 m, such as 5 m to 90 m, such as 10 m to 40 m, and such as 15 m to 25 m.

Fig. 4B illustrates a figure wherein the volume of a sound (i.e. vertical axes) 27 is plotted as a function of the radius 28 defined from the geographic position 14 (i.e. horizontal axes). The volume of sound 27 may also be dependent on the orientation of the user head, but in this particularly example the volume of sound 27 is depending on a distance defined by the radius 28. Fig 4B illustrates an exemplary of an increasing volume of the zone background sound 18 when the first user 35A is moving from the second outer radius Rout2 towards first outer radius Rout1. The zone boundary area 16 may be circular, triangular, square shaped or any kind of shapes. In this particular example the zone boundary area 16 is circular shaped and defined between a first zone radius and a second zone radius. The first zone radius is in the range from 1 m to 100 m, such as 5m to 70 m, such as 10 m to 60 m and such as 20 m to 50 m. The second zone radius is in the range from 1.1 m to 100.1 m, such as 5.1m to 70.1 m, such as 10.1 m to 60.1 m and such as 20.1 m to 50.1 m.

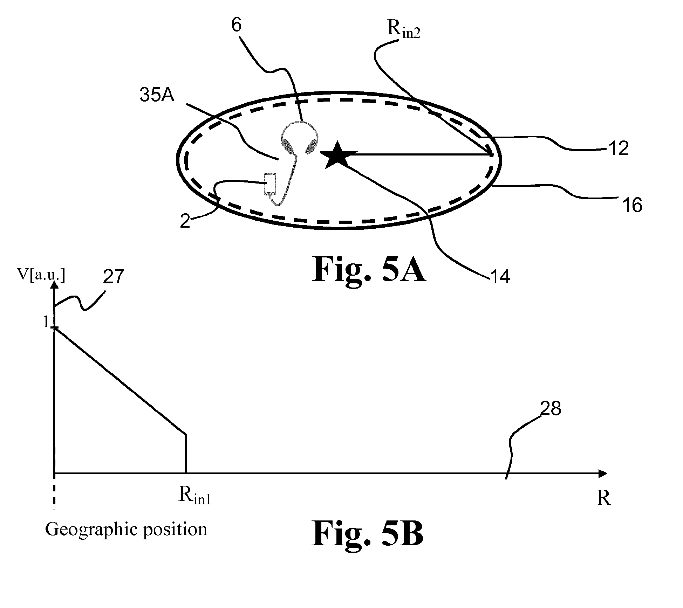

Fig. 5A and 5B illustrate an exemplary of a distance based volume of a zone 10, when a first user 35A is placed inside 11. The inside 11 is configured to an inside acoustic scene information 12, wherein the inside acoustic scene information 12 is provided within a first inner radius Rin1. The first inner radius Rin1 is in the range from 1 m to 100 m, such as 5 m to 50 m, such as 10 m to 50 m, and such as 20 m to 50 m.

Fig. 5B illustrates a figure wherein the volume of a sound (i.e. vertical axes) 27 is plotted as a function of the radius 28 defined from the geographic position 14 (i.e. horizontal axes). The volume of sound 27 may also be dependent on the orientation of the user head, but in this particularly example the volume of sound 27 is depending on a distance defined by the radius 28. Fig. 5B illustrates an exemplary of an increasing volume of the inside acoustic scene information 12 when if the first user 35A is moving towards the geographic position 14.

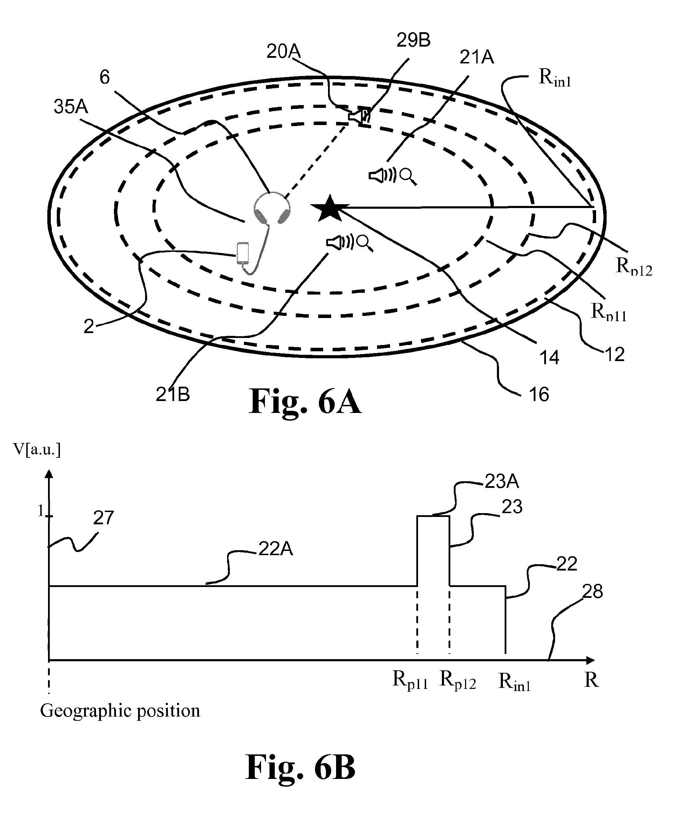

Fig. 6A illustrates an exemplary of a 3D direction based volume of a zone 10, when a first user 35A is placed inside 11. The inside 11 is configured to an inside acoustic scene information 12, wherein the inside acoustic scene information 12 is provided within a first inner radius Rin1. The inside acoustic scene information 12 comprises three posts. The first user is focusing towards one of the three posts which then becomes a first active post 20A while the remaining two posts become a first passive post 21A and a second passive post 21B, respectively. The first passive post 21A and the second passive post 21B may both include a task 29 differently from an interactive task 29B. A first active post comprises at least one task 29 being an interactive task 29B.

Fig. 6B illustrates a figure wherein the volume of a sound (i.e. vertical axes) 27 is plotted as a function of the radius 28 defined from the geographic position 14 (i.e. horizontal axes). The volume of sound 27 may also be dependent on the orientation of the user head, but in this particularly example the volume of sound 27 is depending on a distance defined by the radius 28. Fig 6B illustrates an exemplary of an abrupt increasing volume of the first active post 20A, wherein the first active post 20A sounds a post activation sound 23 including a post-foreground sound and a post feedback sound. The first passive post and the second passive post are denoted as post background sounds 22. The post background sounds 22 keeps constant within the first inner radius Rin1. The ratio between the post activation sound level and the post background sound level is in the range of 0.1m to 10m, such as 0.1m to 5m, and such as 0.1m to 2.5m.

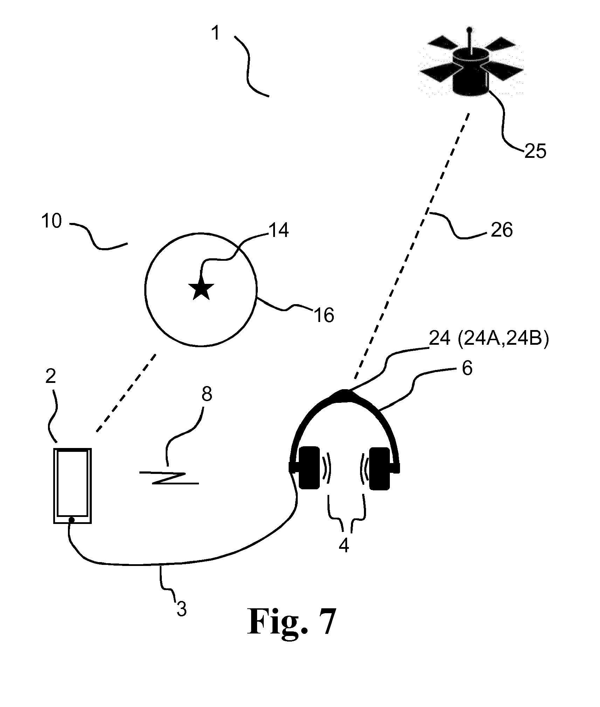

Fig. 7 schematically illustrates an exemplary audio based learning system 1 according to the invention. The audio based learning system 1 has a portable terminal 2, which may be a smart phone or any kind of a cell phone or a tablet or a portable PC. In this particular example the portable terminal 2 is a smart phone. Furthermore, the audio based learning system 1 has an audio unit 6 and a zone 10. The portable terminal 2 may be configured to transmit wirelessly and/or via a cable 3 rendered acoustic information 4 to an audio unit 6 about a zone 10. In this particular example the portable terminal 2 is configured to transmit via a cable 3 rendered acoustic information 4 to an audio unit 6 about a zone 10.The zone 10 spans a zone boundary area 16 around a geographic position 14. The audio unit 6 communicates 8 wirelessly with the portable terminal 2. The zone boundary area 16 may be uniformly or non-uniformly distributed. In this particular example the zone boundary area 16 is uniformly distributed.

The audio unit in this particular example is an earphone or any kind of a head wearing audio unit comprising an inertial measurement unit. In this figure the inertial measurement unit may include a geographical position unit and/or an orientation unit. In this particular example the inertial measurement 24 unit comprises a orientation unit 24B and a geographical position unit 24A. The orientation unit 24B include at least one gyro and/or at least one accelerometer and/or at least one electrical compass for measuring, e.g. head yaw, head pitch and/or head roll. In this particular example the orientation unit includes one gyro to measure the orientation of a users head, e.g. head yaw. The geographical position unit 24A include a GPS unit receiving a GPS satellite signal 26 from a satellite system 25.

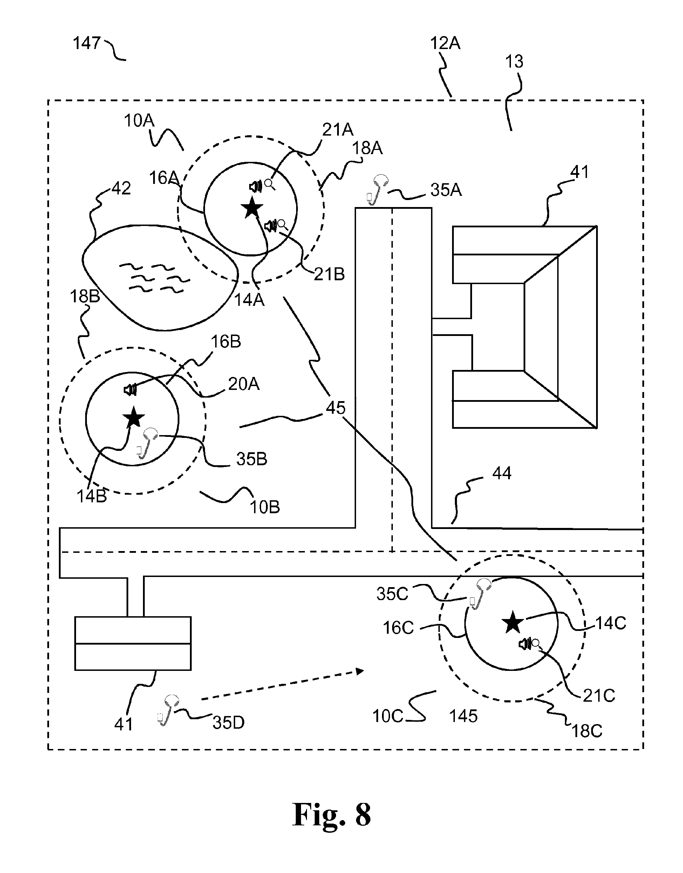

Fig. 8 schematically illustrates a geographical environment augmented by an audio based learning system 1 creating an augmented reality 147. The augmented reality 147 includes buildings 41, a lake 42 and a road 44.The audio based learning system 1 comprises an ensemble 45, wherein the ensemble 45 includes at least one zone 10. Furthermore, the audio based learning system 1 may include an acoustic scene 12A. The acoustic scene 12A may comprise 3D sounds. In this particular example the ensemble 45 comprises a first zone 10A, a second zone 10B and a third zone 10C. The respective zones (i.e. 10A, 10B and 10C) comprises an inside acoustic scene information including one or more posts within a zone boundary area. (16A, 16B, and 16C). The audio based learning system 1 further comprises at least four users.

A user standing outside a zone boundary area 16 of a zone 10 is not able to activate the at least one passive post and/or the at least one active post provided within the zone boundary area 16. In this particular example a first zone 10A includes a first geographic position 14 A, a first zone boundary area 16A, wherein two passive posts 21A and 21B are provided within the first zone boundary area 16A. The first user 35A or any other uses is not able to activate the two passive posts 21A and 21B. The first user 35A is receiving through a portable terminal 2 (not shown in fig. 8) and an audio unit 6 (not shown in fig 8) an outside acoustic scene information, wherein the outside acoustic scene information includes the sounds from a first zone background sound 18A, a second zone background sound 18B and a third background sound 18C. Since the first user 35A is placed nearest the first zone 10A the volume of the first background sound 18A sounds higher compared to the total volume of the residual background sounds, wherein the residual background sounds includes the second zone background sound 18B and the third zone background sound 18C.

A user standing inside a zone boundary area 16 of a zone 10 is able to activate at least one passive post 21A provided within the zone boundary area 16. In this particular example a second zone 10B includes a second geographic position 14B and a second zone boundary area 16B, wherein a first active post 20A is provided within the second zone boundary area 16B. The first active post 20A has been activated by a second user 35B standing within the zone boundary area. The second user 35B is receiving through a portable terminal 2 (not shown in fig. 8) and an audio unit 6 (not shown in fig 8) an inside acoustic scene information, including the sounds from at least a first active zone 20A.

A user standing on a zone boundary area 16 would experience a switching between the outside acoustic scene information 13 and the inside acoustic scene information 12. The user standing on the zone boundary area 16 may not be able to activate any passive post. In this particular example a third user 35C is standing on a third zone boundary area 16C of a third zone 10C. The third zone 10C comprises a third geographic position 14C. The third user 35C is receiving through a portable terminal 2 (not shown in fig. 8) and an audio unit 6 (not shown in fig 8) a sound switching between the outside acoustic scene information 13 and the inside acoustic scene information 12 (not shown in fig. 8), wherein the inside acoustic scene includes the sound from a third passive post 21C. The third person 35C is not able to activate the third passive post 21 since it is at the boundary.

A fourth user 35D is receiving through a portable terminal 2 (not shown in fig. 8) and an audio unit 6 (not shown in fig 8) the outside acoustic scene information. The fourth user is oriented towards the third zone 10C, wherein the user experiences the outside acoustic scene information comprising the third zone background sound 18C playing on top of the first zone background sound 18A and the second zone background sound 18B.

According to fig. 8, a further embodiment may be that the four users (35A-35D) are sharing a portable terminal, being a computer, a laptop, a server, a tablet, a smart phone or any kind of an electronic device capable of transmitting signals; preferably wireless. The portable terminal 2 may communicate with at least one audio unit carried by a first user 35 A. Furthermore, the portable terminal 2 may communicate with at least four audio unit carried by four users (35A - 35D), respectively.

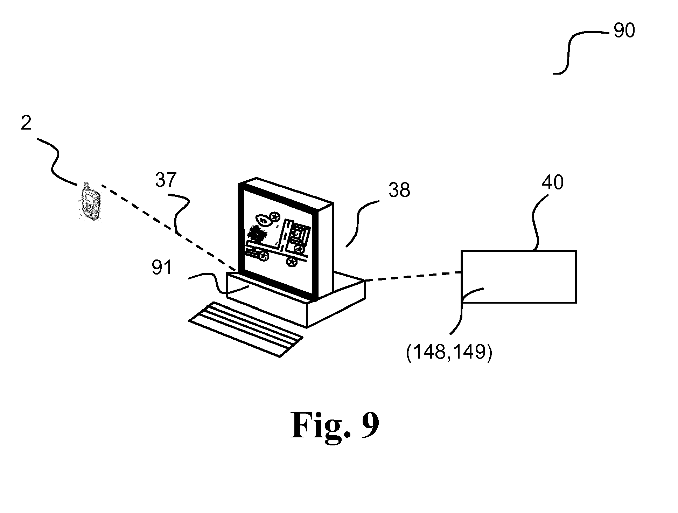

Fig. 9 illustrates an exemplary of a setup tool 90, wherein a portable terminal 2 is being configured by the setup tool 90 to an audio based learning system 1. The setup tool 90 comprises an auto placement algorithm 91, wherein in this exemplary the auto placement algorithm 91 may be implemented in a terminal 38. The auto placement algorithm 91 may be configured to access a local environment 148 of geospatial information 149 from a geospatial information server 40 and to setup at least one ensemble 45 with at least one zone 10 and which auto placement algorithm 91 is configured to perform a placement of each zone 10 within the local environment 148 as a function of the local environment 148. In this particular example the terminal 38 is a computer downloading a map from a map server 40A map and/or a new or updated ensemble 45 comprising at least one zone 10. The zone may also comprise at least one post 20. The map may be a street map, road map, sea map or any kind of a map illustrating a local environment 148 or a geographical area. The portable terminal 2 may be configured to an audio based learning system 1 wiressly and/or wired 37.

According to one measure of scale, a placement may not be adequate at all if the ensemble is placed in a river for example and a ensemble match is assigned a value of 0. If the placement is "perfectly" adequate in all aspects then the ensemble match is assigned a value of 100. A person skilled in the art wanting to implement another measure or scale will easily be able to find and implement measures and scales that serve the same purpose.

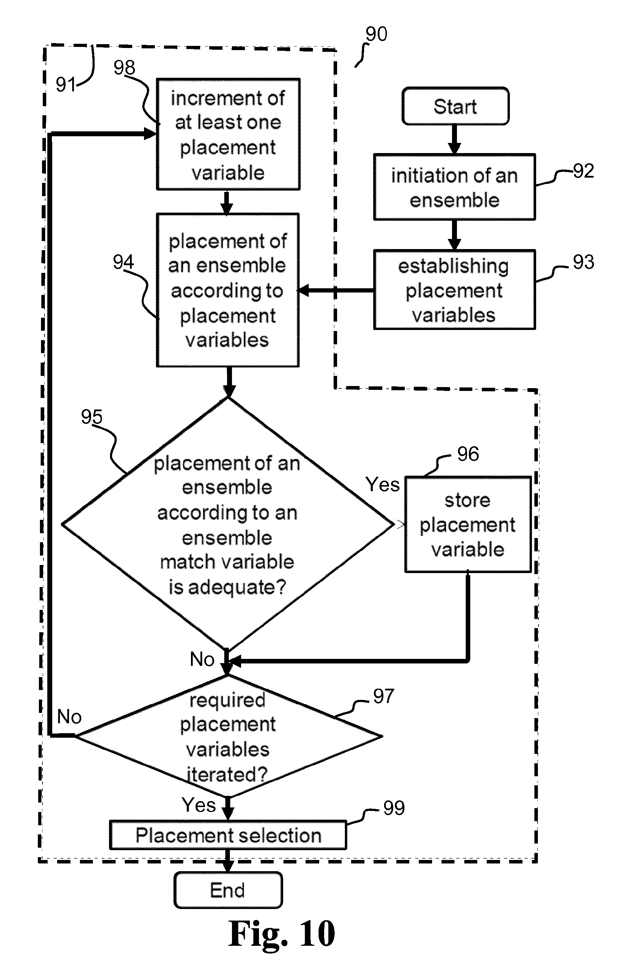

Fig. 10 is a flow chart illustrating steps of a setup tool 90 of an audio based learning system 1, wherein the setup tool 90 comprises an auto placement algorithm 91 configured to place an ensemble 45 in a geographical environment. A user starts out by initializing an ensemble 92 followed by establishing placement variables 93 to the initialized ensemble 92. According to the placement variables defined in 93 the placement of an ensemble 45 is determined 94. If the placement of an ensemble 45 according to an ensemble match variable is adequate 95 the placement variable is stored 96 and the next step a step of 97. If the placement of an ensemble 45 according to an ensemble match variable is not adequate the next step is 97. Step 97 comprises at least one counter 97 that may be related to a displacement angle 137, a displacement value 136, or a rotation angle 138. If a counter has not reached a maximum value, the next step may be step 98. Step 98 increments at least one placement variable, and thereafter steps 94 to 97 may be iterated. If all counters have reached a maximum value, respectively, the next step may be a step of placement selection 99 that selects one or more prefer ensembles.

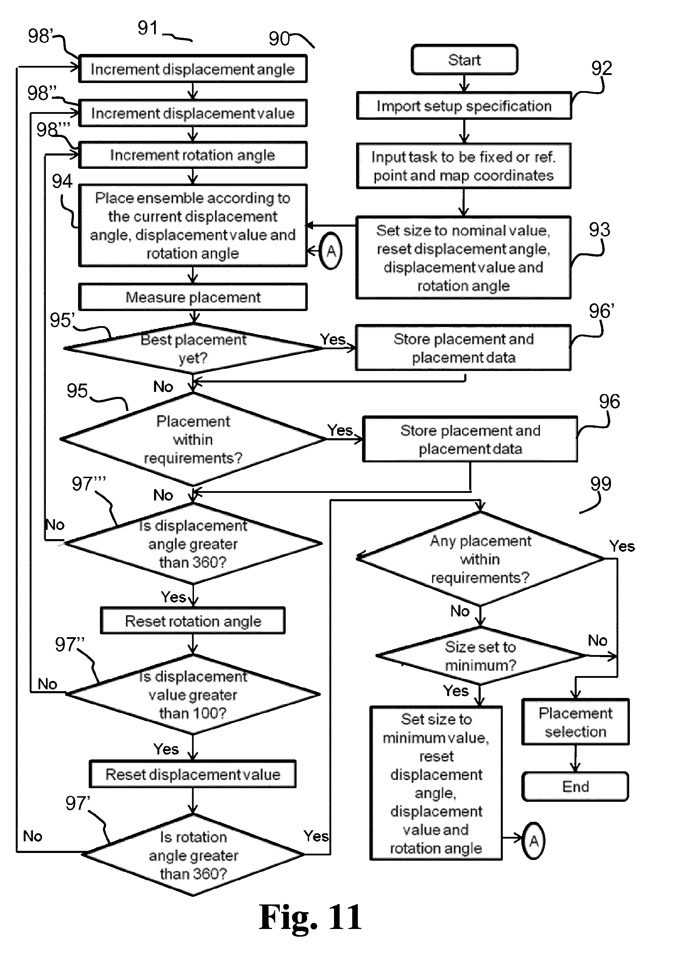

Fig. 11 is a more detailed flow chart of the flow chart illustrated in Fig. 10. This embodiment comprises three counters 97 including a first counter 97' related to a displacement angle 137, a second counter 97" related to a displacement value 136 and a third counter 97"' related to a rotation angle 138. If one and/or all three counters have not reached a maximum value, respectively, the next step may be a step of incrementing at least one placement variable 98. In this embodiment the step of incrementing at least one placement variable contains multiple steps 98', 98", 98"' that each increment the displacement angle 137, the displacement value 136 and the rotation angle 138, respectively, and thereafter steps 94 to 97 may be iterated. If one and/or all three counters 98, i.e. the first counter 97', the second counter 97" and the third counter 97"', have reached a maximum value, respectively, the next step may a step of placement selection 99 that selects one or more preferred ensembles.

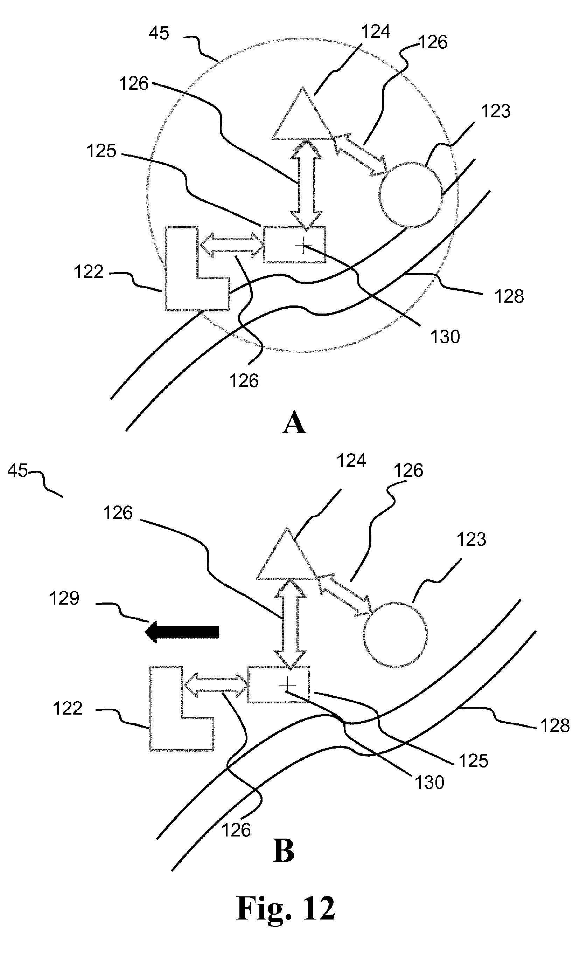

Fig. 12A and 12B illustrates an exemplary of an ensemble 45 comprising at least four zones having plurality of shapes, wherein the plurality of shapes may be, such as triangular, square, rectangular, circular, non-regular and/or regular polygon, L-shapes or any kind of a letter shape. In this particular example, the ensemble 45 discloses four zones each having the shape of an "L" 122, circular 123, triangular 124 and rectangular 125. The un-filled arrows 126 indicate the pathways between the pluralities of zones. The two curved parallel lines indicate a stream, a small river or any kind of a water stream. In this particular example the ensemble 45 is not placed adequately, since L shape zone 122 and circular zone 123 are overlapping the stream 128. Fig 12B illustrates a movement of the not adequately placed ensemble and the reference point 130 away from the stream causing a displacement value shift 129. An adequate placement of the ensemble 45 is obtained when at least one zone is not overlapping an unwanted object. In this particular example an adequate placement of the ensemble 34 is obtained by moving the ensemble 45 away from the stream 128 avoiding overlapping between the stream 18 and any of the zones (i.e. 122 - 125).

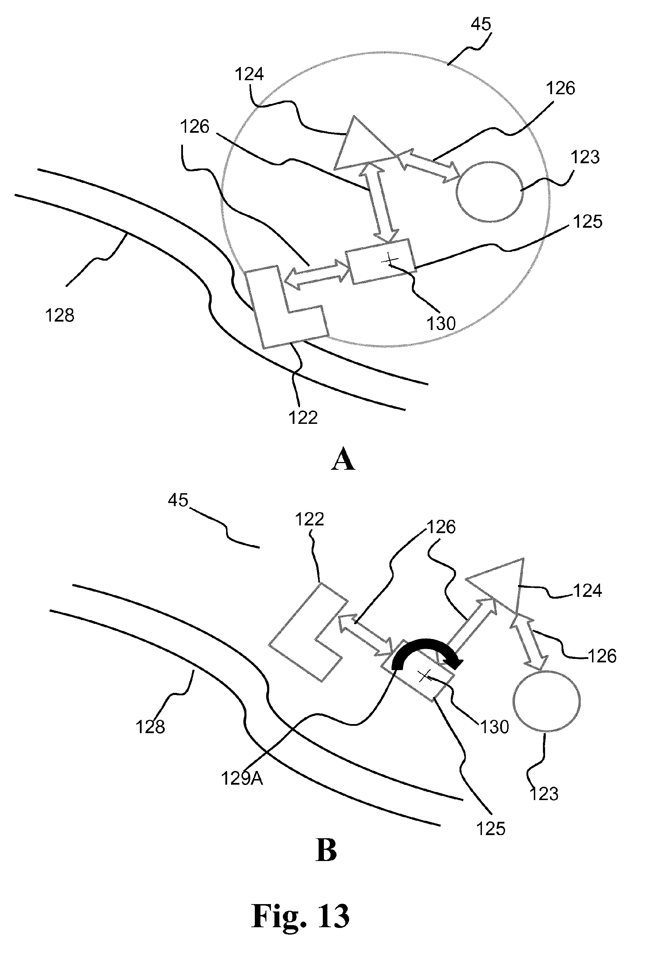

Fig. 13A and 13B illustrates an exemplary of an ensemble 45 comprising at least four zones having plurality of shapes. If the ensemble 45 is placed none adequately the ensemble 45 may overlap a restricted area, an object or any kind of a geographical element. A restricted area may be an area surrounding an object or any kind of a geographical element, wherein the ensemble may not enter or overlap. The restricted area may have a restricted boundary surround an object, wherein the distance between the restricted boundary zone and the object may be within a range of 0.5 m to 25 m, such as 2 m to 15 m and such as 5 m to 10 m. In this particular example the "L"-shaped zone is overlapping a stream 128 and thereby the ensemble 45 is not adequately placed. Fig 13B illustrates an exemplary of a rotation angle shift 129A of the not adequately placed ensemble 45 around a reference point 130.

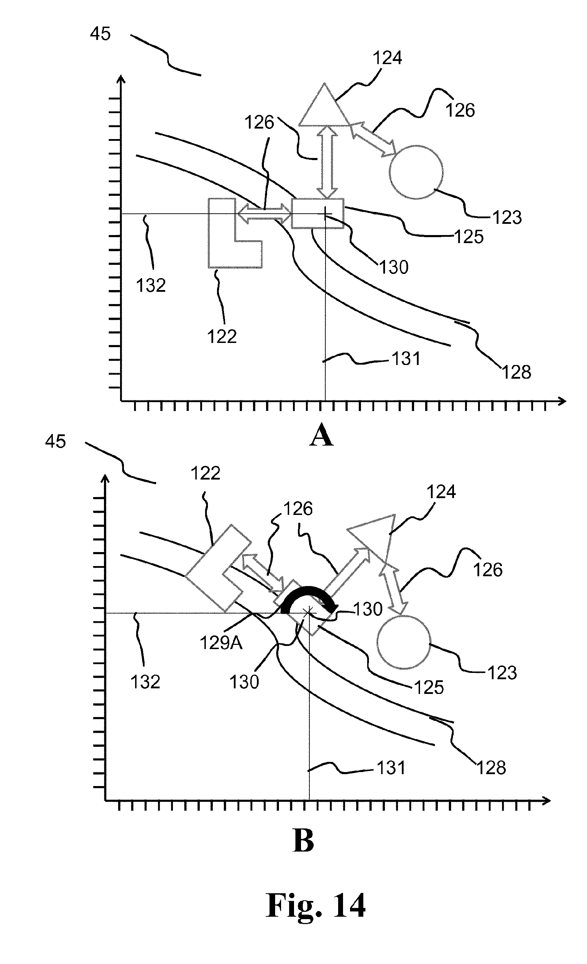

Fig. 14A -14B illustrates a non-adequately placed ensemble 45, wherein the reference point 130 is placed within a vertical displacement value tolerance 131 and within a horizontal displacement value tolerance 132. The ensemble is not adequately placed if at least one pathway 126 is crossing an object or any kind of a geographical element and/or if at least one zone is overlapping an object or a restricted area. In this particular example both a pathway 126 and a rectangular zone 125 is overlapping a stream 128. Fig. 14B illustrates a 45 ° rotation angle shift 129A of the rotation angle around the reference point 130 causing a 45 ° rotation of the ensemble 45. The placement of the ensemble 45 is still not adequate.

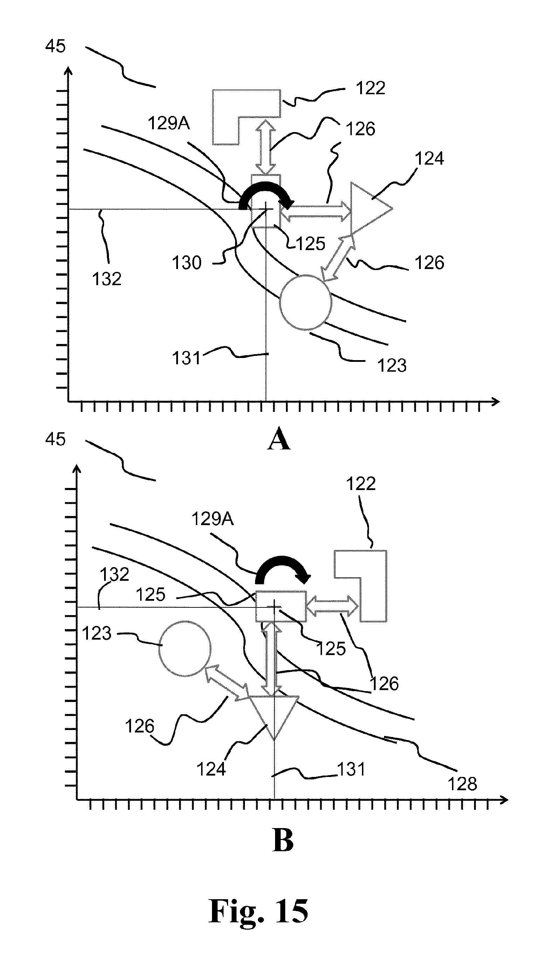

Fig 15A and 15 B illustrate a rotation angle shift 129A of the rotation angle around the reference point 130 causing a rotation of the ensemble 45. In fig 15 A the rotation angle shift is 45° and in fig 15B the rotation angle shift is 90°. From fig 14A to fig. 15B the ensemble has been rotated for 225 ° and still the ensemble 45 is not adequately placed, since at least one zone is overlapping the stream 128 and/or at least one pathway is crossing the stream 128.

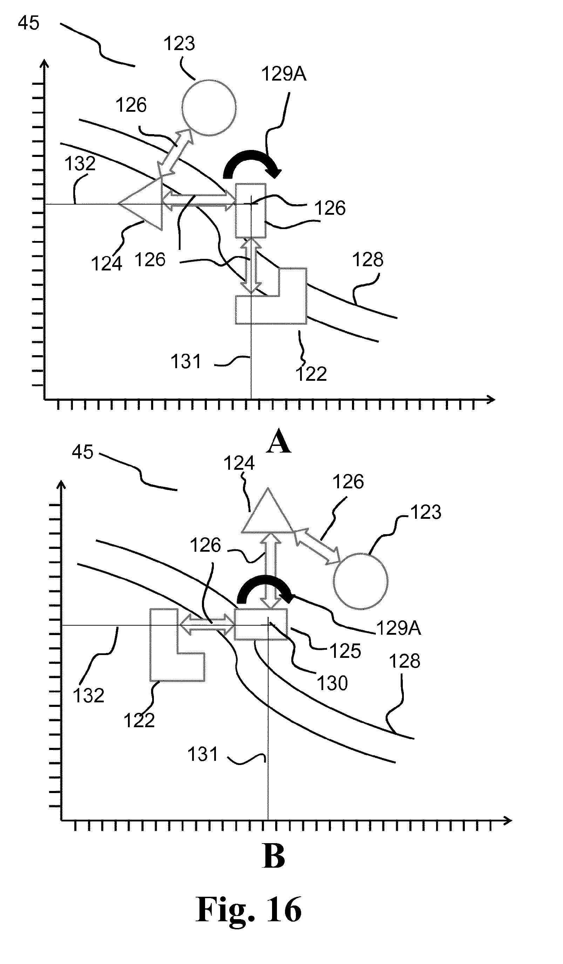

Fig 16A and 16 B illustrate an additionally 90 ° rotation angle shift 129A of the rotation angle around the reference point 130 causing a 90 ° rotation of the ensemble 45. From fig 14A to fig. 16B the ensemble has been rotated for 360 ° and still the ensemble 45 is not adequately placed, since at least one zone is overlapping the stream 128 and/or at least one pathway is crossing the stream 128.

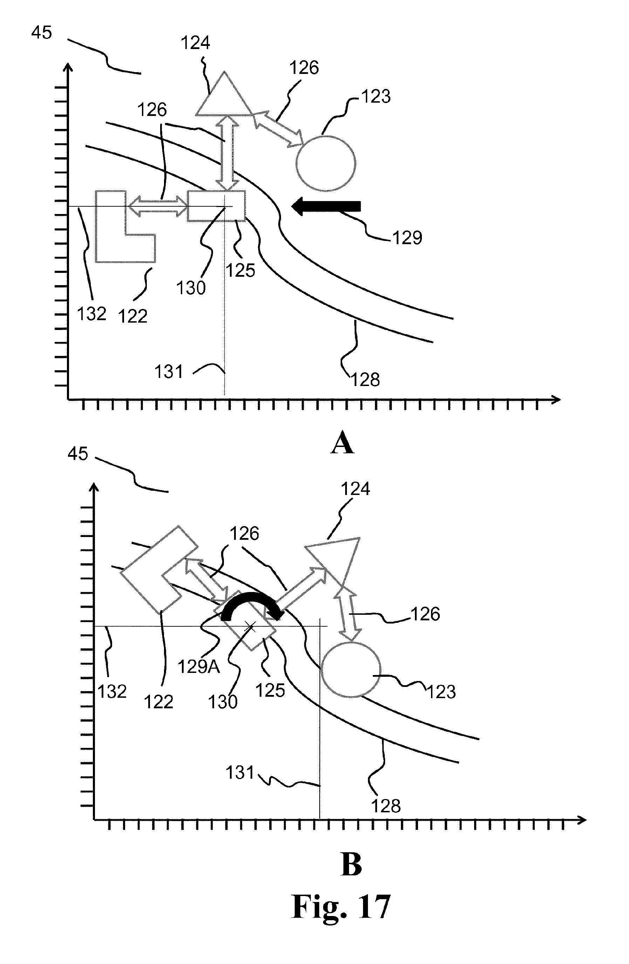

Fig 17A and 17B illustrates a 45 ° rotation angle shift 129A of the rotation angle around the reference point 130 and a displacement value shift 129, causing a 45 ° rotation of the ensemble 45 and a movement of the ensemble within the horizontal displacement value tolerance 132 and the vertical displacement value tolerance 131. The ensemble is still not adequately placed.

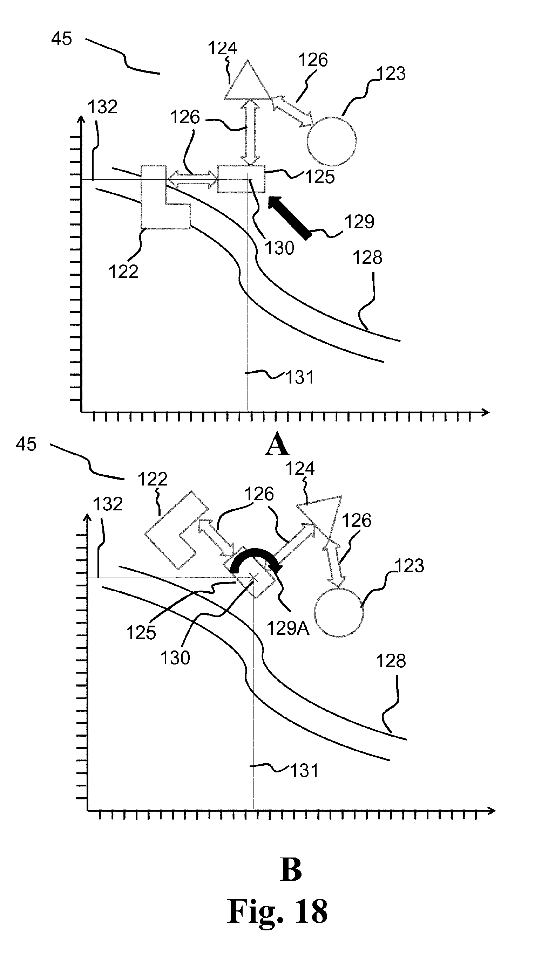

Fig 18A and 18B illustrates a 45 ° rotation angle shift 129A of the rotation angle around the reference point 130 and a displacement value shift 129, causing a movement of the ensemble 45 and the reference point 130 and a 45 ° rotation of the ensemble 45 around the reference point 130. The reference point 130 is still within the horizontal displacement value tolerance 132 and the vertical displacement value tolerance 131. The ensemble 45 is adequately placed since none of the zones (122 - 125) are overlapping the stream 128.

The horizontal displacement value 132 tolerance may be in the range of 0.1 m and 50 m, such as 1 m and 40 m, such as 5 m and 30 m, such as 10 m and 20 m and such as 10 and 15 m.

The vertical displacement value tolerance 131 may be in the range of 0.1 m and 50 m, such as 1 m and 40 m, such as 5 m and 30 m, such as 10 m and 20 m and such as 10 and 15 m.

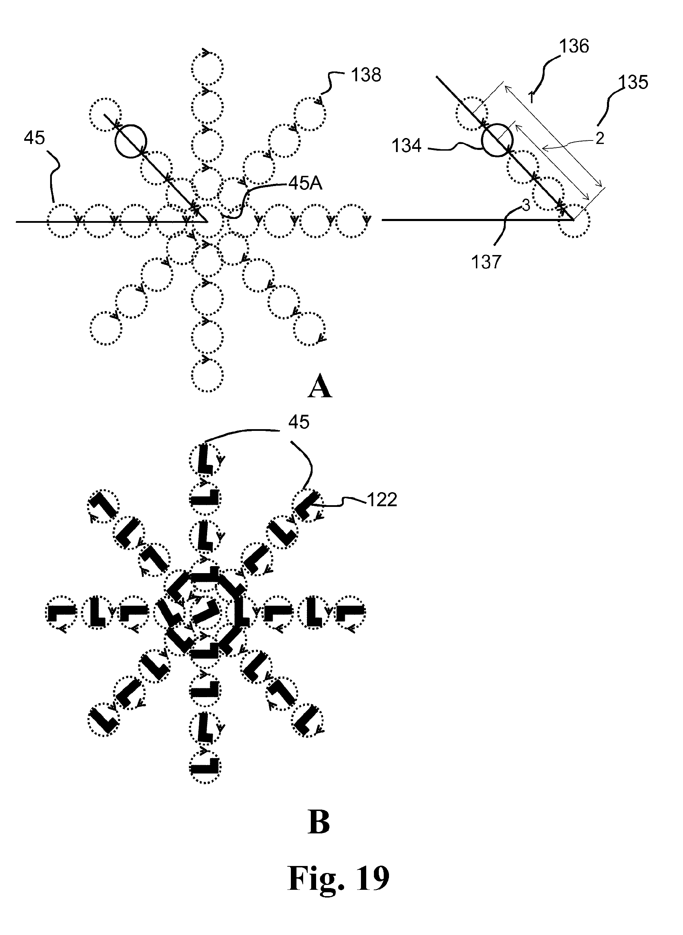

Fig 19A and 19B illustrate an exemplary of an auto placement algorithm searching for an optimal placement of an ensemble 45. The auto placement algorithm comprises three main input variables, wherein the three main variables may be a displacement angle 137, a displacement value 136 and a rotation angle 138. The displacement angle 137 and the rotation angle 138 may be in the range of 0 ° and 360 °. The displacement value 136 may be in the range of 0 m and 2500 m, such as 5 m and 1500 m, such as 10 m and 1000 m, such as 10 m and 500 m, such as 10 m and 250 m, such as 50 m and 250 m and such as 100 m and 250 m.

The counter of the displacement angle 137 is defined as being the main counter while the counter of the displacement value 136 and the rotation angle 138 are being the first subcounter and the second subcounter, respectively. The second subcounter is initialized by the first subcounter, and the first subcounter is initialized by the main counter.

In this particular example the placement of a first ensemble 45a is calculated at the displacement angle 137, e.g. 0°, at the displacement value 136, e.g. 0 m, and then at different rotation angles 138 between 0 ° and 360 °. While the displacement angle 137 is constant the displacement value 136 and the rotation angle 138 is changing until they both have reached the maximum value within the respective defined range, e.g. displacement value 136 has reached 2500 m and rotation angle 138 has reached 360°.

When the second subcounter and the first subcounter have finished counting the main counter increases the displacement angle 137 with a predetermined angle resolution. The angle resolution is determined as being the difference between the maximum displacement angle and the minimum displacement angle divided by the total number of counts.

In this particular example the displacement angle 137 is incremented by the angle resolution, e.g. 45°, and the counting of the displacement value and the rotation angle repeats until they both have reached their respective maximum value.

In this particular example of the scan by the algorithm the current ensemble has found a preferred ensemble 134 has been found placed at a preferred displacement value 135.

Fig. 19B illustrates the above example of an auto algorithm, wherein the ensemble 45 includes at least one "L" shaped zone 122. Fig. 19B illustrates clearly the change in the rotation angle 138 for each change of the displacement angle 137 and the displacement value 136.

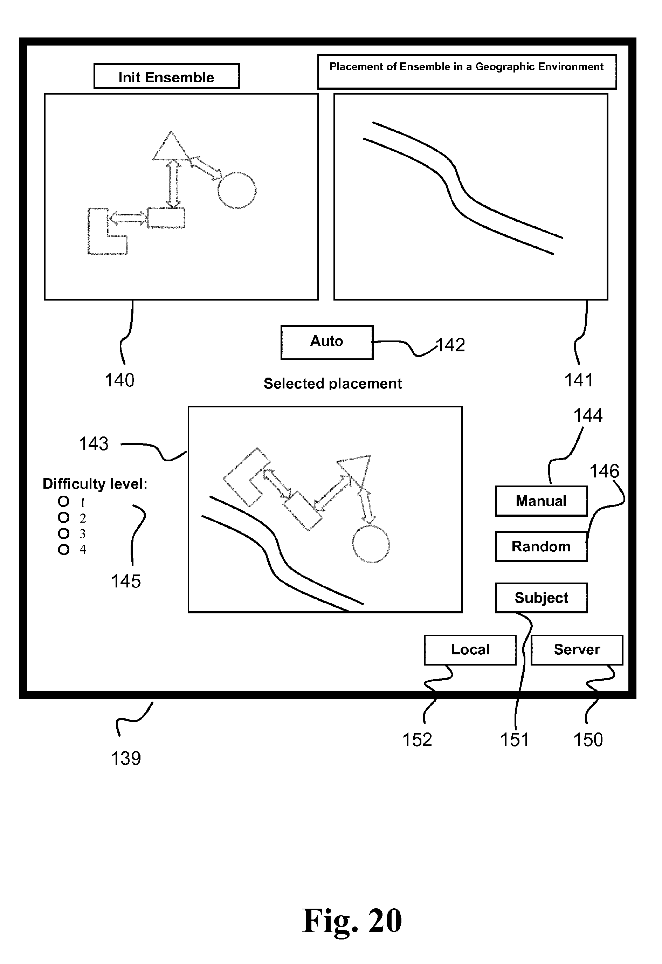

Fig.20 illustrates an exemplary of a graphical user (GUI) interface of a distribution system 139 comprising an auto placement algorithm, wherein the auto placement algorithm configures an ensemble 45 to a geographical environment. A user initializes an ensemble 140 comprising at least one zone and/or at least one pathway. In 141 the user decides the placement of the ensemble according to placement variables. The user initializes the auto placement algorithm 142 and the distribution system 139 calculates the optimal placement of the ensemble 143.

The user is able to manually adjust each zone(s) 144. Furthermore, the user is able to choose that the distribution system 139 may randomly 146 configure the ensemble 45. Additionally, the user may be able to let the distribution system choose a subject 151 which is tailored to the user based on received personal information from a social network or from the user. Furthermore, the user is able to manually choose a subject locally 152 from a computer or from a storage device. Furthermore, the user is able to choose a subject from a server 150. In 145 the user is able to choose a difficulty level of the ensemble 45.

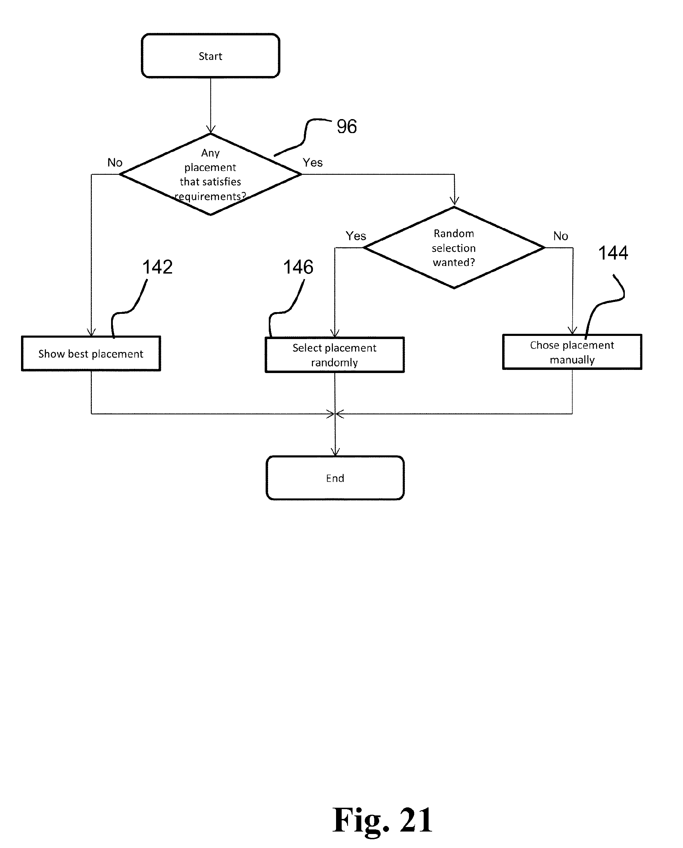

Fig. 21 illustrates a particular embodiment of a for random and best placement selection method of a placement of an ensemble supporting the distribution system 139 or the auto placement algorithm 91. In the case that a stored placement variable 96 satisfy the placement requirements defined then one random placement 144 can be selected or a manual placement 146 can be chosen. If the stored placement variable does not satisfy the placement requirements then a best placement 142 is show.

### Examples

A user is holding a portable terminal and at least one audio unit. The portable terminal is configured to an audio based learning system comprising rendered acoustic information. In this example the rendered acoustic information may comprise sounds relating to an orientation challenge, such as a treasure hunt, orienteering, hide and seek or any kind of a challenge wherein the user may search for at least one target object, i.e. a zone comprising one or more post.

The audio based learning system in this particularly example may comprise at least one portable terminal configured to transmit rendered acoustic information to at least one audio unit about at least one zone, which the at least audio unit and at least one zone are spatially interrelated. The portable terminal may visualize a map indicating a plurality of zones including at least a first zone and a second zone. The respective zones may span a uniform and/or a non-uniform zone boundary area, separating outside and inside. The zone comprises a geographical position surrounded by the zone boundary area.

In this example the starting position of the at least one user is outside, i.e. outside the plurality of zones. Since the user is operating outside, the portable terminal may transmit an outside acoustic scene information to the least one audio unit. The outside acoustic scene information may comprise zone-background sounds from the plurality of zones, wherein the outside acoustic scene information may include a 3D direction and/or a distance based volume. The outside acoustic scene may be related to sounds relating to a city, e.g. city of London including the sounds of Big Ben, people speaking English, traffic and etc. When the user initializes a first button and looking at the first zone, the related first zone-background sound to the first zone may be played on top of the outside zone-background sounds related to at least the second zone. The first zone background sound may play a sound relating to an attraction, such as Big Ben, Tower of London or Westminster Abbey.

The user may cross the zone boundary area, i.e. the user is going from outside to inside of at least the first zone, an inside acoustic scene information may be transmitted from the portable terminal to the at least one audio unit. The inside acoustic scene information may comprise a zone-intro sound playing when the user is within the zone boundary area of the at least first zone. The zone intro sound may include info and/or hints, such as "you have now entered Big Ben" or "be ready for solving several questions regarding Big Ben", or "you have now entered Big Ben, then go to Westminster Abbey".

Inside may include plurality of posts including at least a first and a second post. The inside acoustic scene information may comprise plurality of post background sounds, including post background sounds from the at least first and second posts. When the user looks in the direction of the first post, and pressing a second button, a first post-foreground sound is playing. After the first post-foreground sound has played, the user may record an answer via a microphone. The microphone may be an in-built or an external microphone. After recording the answer, a first post feedback sound is played. The post feedback sound may be a confirmation to the user that something was recorded. Also, the post-feedback sound may give further info/hints to the other task related to at least the second post. When the user moves outside the at least first zone the outside acoustic scene information appears in the audio unit and the user may be guided towards the second zone.

The difficulty with audio as an instructional medium is that it can be hard to concentrate on a voice for long periods, but the present invention makes it possible for a user to move in physical surroundings configured to an augmented reality, i.e. a physical environment whose elements are augmented or supplemented by an audio scene. The user moving in an augmented reality may increase the user's concentration for a longer period and its interaction in different situations. Furthermore, the present invention has the advantage of being able to move in physical surroundings and also being physical active, e.g. using the hands and feet.

In another example the rendered acoustic information may comprise sounds relating to a learning system teaching at least one user to behave in traffic when the user is riding on a bicycle, a motorbike or any kind of transport vehicle. As in the previous example, the at least one user is wearing a portable terminal and an audio unit, wherein the portable terminal is transmitting an outside acoustic scene information to the audio unit. The outside acoustic scene information may be related to a traffic sound including car sounds, people on bikes, sounds from roadworks and etc. The at least one user may be guided or led towards a first zone and entering the inside of the first zone. The inside may include plurality of posts including at least a first and a second posts. The inside acoustic scene information may comprise plurality of post background sounds, wherein the plurality of post background sounds may include a task and/or an assignment. When the user has been guided towards the first post a first post foreground sound is playing including an info/hint and/or a question, e.g."How will you handle the situation when a dog suddenly is crossing a street?" After the first post-foreground sound has played, the user can record an answer, and after the recording, a first post feedback sound is played. The post feedback sound may be a confirmation to the user that something was recorded. Also, the post-feedback sound may give further info/hints to the second task related to at least the second post. The second post may be related to, e.g. "how do you handle the situation when you want to cross a street?" When completing the tasks related to at least the first and the second posts, the user is guided towards the second zone, which may be about handling a situation where the user is meeting a hurdle involving people, such as roadwork, a biker or any kind of vehicle the user wants to pass.

The effect of the present invention is that the user is able to be in an augmented reality and still using the hands and legs for, e.g. biking, or any kind of activity demanding that you are able to use the hands and legs. If a user wants to practice a challenge which involves moving in a physical environment involving the risk of losing his/her life or getting serious injured, the present invention makes it possible to move the challenge away from a high risk physical environment to a low risk physical environment and still being able to practice the challenge with enthusiasm and high learning. The low risk physical environment involves no risk of losing one's life or getting injured.

In another example the rendered acoustic information may comprise sounds relating to a general learning system. The at least one user is wearing a portable terminal and an audio unit, wherein the portable terminal is transmitting an outside acoustic scene information to the audio unit. The outside acoustic scene information may be related to school learning, such as subjects within mathematics, languages, biology, geography or any kind of school subjects. In this particularly example at least one user may be guided towards a first zone entering the inside of at least a first zone. The user entering the at least first zone while a zone background sound is playing, teaching the user within a school subject or any kind of subjects. The at least first user is then led or guided towards at least a second zone. At least the first zone may include at least one post, wherein the at least one post may include at least one task being an interactive task and/or a passive task. The interactive task may include an assignment to be solved by the student. The student solves the assignment by speaking into the microphone mounted on the audio unit. The passive task may include info or hints about a subject.

The advantage of the invention is that it reduces the workload of the teacher when performing active learning. Furthermore, the present invention makes it possible to tailor active learning to each student without confusing the students. E.g. if the subject is geography and a first student is unacquainted with the country of Denmark and a second student is unacquainted with the country of Germany, the teacher is able to tailor an augmented reality to both students, wherein the first student may be configured to an augmented reality about Denmark and the second student may be configured to an augmented reality about Germany. Both students may operate in the same local environment.

A further advantage of the present invention is that the augmented reality enhances the learning of the user wearing the audio based learning system, since the audio based learning system enhances the commitment of a student.

## Claims

1. An audio based learning system (1) comprising
at least one portable terminal (2) configured to transmit rendered acoustic information (3) to at least one audio unit (6) about at least one zone (10), which audio unit (6) and at least one zone (10) are spatially interrelated (15); which
at least one zone (10) spans a bounded area around a geographical position (14) and has an outside (17) and an inside (11) separated by a zone boundary area (16), which at least one zone (10) inside (11) has inside acoustic scene information (12);
at least one audio unit (6) is configured to be head worn and configured to communicate (8) with the at least one portable terminal (2) and configured
- to sound outside acoustic scene information (13) about the at least one geographical position (14) of at least one zone (10) when outside (17) and
- to sound inside acoustic scene information (12) when inside (11) at least one zone (10).

2. An audio based learning system (1) according to claim 1 wherein the inside acoustic scene information (12) comprising at least one post (20) preferably with a task (29), most preferably an interactive task (29B).

3. An audio based learning system (1) according to any of claims 1 to 2 wherein the audio unit (6) comprises a geographical position unit (24A) configured to estimate the geographical position (14) of the audio unit (6).

4. An audio based learning system (1) according to any of claims 1 to 3 wherein the audio unit (6) comprises an orientation unit (24B) for estimating a current orientation of a user when the user handles the orientation unit (24B) in its intended operational position.

5. An audio based learning system (1) according to any of claims 1 to 4 wherein the audio unit (6) comprises a microphone (5) and means for transmitting acoustic information (4) to the portable terminal (2).

6. An audio based learning system (1) according to any of claims 1 to 5 wherein the portable terminal (2) is configured to render the transmitted acoustic information (3) into either an inside (11) or an outside (17) acoustic scene (12A) as a function of being inside (11) or outside (17) a zone (10).

7. An audio based learning system (1) according to any of claims 1 to 6 wherein the portable terminal (2) is configured to store, retrieve and replay acoustic information (4) from an acoustic scene (12A).

8. An audio based learning system (1) according to any of claims 1 to 7 wherein the portable terminal (2) is configured to communicate and share acoustic scenes (12A) with at least one other terminal.

9. An audio based learning system (1) according to claim 8 wherein one audio unit (6) is a master system and at least one other audio unit (6) is a slave system.

10. An audio based learning system (1) according to any of claims 1 to 9, wherein the portable terminal (2) is embedded in the audio unit (6); which audio unit (6) preferably is a headset.

11. A setup tool (90) of an audio based learning system (1) according to any of claims 1 to 10, which setup tool (90) is configured to interactively create, store, edit an ensemble (45) of at least one zone (10) with a span, with an inside (11) acoustic scene (12A) and a geographical position (14).

12. A setup tool (90) of a learning system according to claim 11, wherein the setup tool (90) further comprises an auto placement algorithm (91) configured to access a local environment (148) of geospatial information (149) from a geospatial information server and to setup at least one ensemble (45) with at least zone (10) and which auto placement algorithm (91) is configured to perform a placement of each zone (10) within the local environment (148) as a function of the local environment (148).

13. A setup tool (90) of a learning system according to claim 12, wherein the auto placement algorithm (91) is configured in a computational unit for performing
- initiation of an ensemble (45);
- establishing placement variables (93);
- placement of an ensemble (45)according to placement variables (94);
- iteratively performing the following functions:
o determine if placement of an ensemble (45) according to an ensemble match variable (95) is adequate and if adequate store placement variable(s) (96)
o increment of at least one placement variable (98);
- until the placement variable(s) preset range has been iterated;
- select placement (99).

14. A distribution system (139) of an audio based learning system (2) according any of claim 1 to 10, which distribution system(139) is configured to create, store, edit and share an ensemble (45) of at least one zone (10).

15. A distribution system(139) of an audio based learning system (1) according any of claim 1 to 10 or 14, which distribution system(139) is configured to create, store, edit and share an ensemble (45) of at least one zone (10) and to apply auto placement algorithm (91) according to any of claim 12 or 13.
